# EUROPÄISCHE PATENTSCHRIFT

(11) **EP 1 756 435 B1**
(45) Veröffentlichungstag und Bekanntmachung des Hinweises auf die Patenterteilung: **27.04.2016**
(21) Anmeldenummer: 05741212.4
(22) Anmeldetag: 21.05.2005
(51) Int. Cl.: F16B 13/14

(54) **VERFAHREN ZUR INJEKTIONSBEFESTIGUNG**
INJECTION FIXING METHOD
PROCEDE DE FIXATION D'INJECTION

(30) Priorität: 16.06.2004 DE 102004029018
(43) Veröffentlichungstag der Anmeldung: 28.02.2007
(73) Patentinhaber: fischerwerke GmbH & Co. KG, 72178 Waldachtal (DE)
(72) Erfinder: JAKOB, Rainer, 79111 Freiburg (DE); BERG, Ralph, 79112 Freiburg (DE)
(74) Vertreter: Suchy, Ulrich Johannes
(86) Internationale Anmeldenummer: PCT/EP2005/005532
(87) Internationale Veröffentlichungsnummer: WO 2005/124163

(56) Entgegenhaltungen:
- EP-A- 1 286 062
- DE-U1- 7 900 490
- DE-U1- 20 105 013
- US-A- 5 562 377

## Beschreibung

Die Erfindung betrifft eine Injektionsbefestigungsanordnung mit den Merkmalen des Oberbegriffs des Anspruchs 1 sowie ein Verfahren zur Injektionsbefestigung mit den Merkmalen des Oberbegriffs des Anspruchs 8. Dabei ist mit Injektionsbefestigung die Verankerung einer Ankerstange bspw. mit Mörtel in einem Bohrloch in einem Mauerwerk gemeint.

Die Befestigung mit Injektionsbefestigungsanordnungen ist seit langer Zeit bekannt. In einen Verankerungsgrund, beispielsweise ein Mauerwerk aus Lochbaustoffen, wird ein Bohrloch erstellt. In dieses Bohrloch wird eine Ankerhülse eingebracht, wie sie beispielsweise aus der Druckschrift DE 201 05 013.7 bekannt ist. Die bekannte Ankerhülse ist als Siebhülse mit Sieblöchern bspw. aus Kunststoff ausgebildet. Nach dem Einbringen ins Mauerwerk wird Mörtel in die Ankerhülse injiziert und tritt aus den Sieblöchern der Ankerhülse aus. Anschließend wird die Ankerstange in die Ankerhülse eingebracht. Sie verdrängt und verdichtet den Mörtel und ist nach dem Aushärten des Mörtels in der Bohrung im Mauerwerk verankert. Über die Ankerstange wird der Befestigungsgegenstand aufgeschoben und mittels einer Mutter und gegebenenfalls einer Unterlegscheibe als Gegenlager fixiert.

Die bekannten Ankerhülsen haben den Nachteil, dass sie nur für die sogenannte "Vorsteckmontage" geeignet sind. Damit ist gemeint, dass beim Montageablauf zunächst die Positionen der Verankerungspunkte auf den Verankerungsgrund markiert werden. Dies kann beispielsweise heißen, dass ein bestimmtes Lochbild eines zu befestigenden Gegenstandes auf ein Mauerwerk übertragen werden muss. Im zweiten Schritt wird das Bohrloch erstellt, dann der Anker gesetzt und schließlich der zu befestigende Gegenstand über die Ankerstange geführt und mit einer Mutter gesichert. Gerade bei Gegenständen mit drei oder mehr Verankerungspunkten kann jedoch die Übertragung auf den Verankerungsgrund sehr zeitaufwändig sein. Im Bereich von Kunststoffdübeln und Metallankern, die über Spreizkräfte verankern, haben sich deshalb Dübelarten auf dem Markt etabliert, die eine sogenannte "Durchsteckmontage" erlauben. Dabei werden die Löcher des zu befestigenden Gegenstandes als Bohrschablone benutzt, da der Bohrlochdurchmesser im anzuschließenden Bauteil mindestens gleich groß wie im Verankerungsgrund ist. Ohne den Gegenstand nochmals vom Verankerungsgrund abzunehmen, kann der Dübel direkt durch den Gegenstand gesetzt und verspreizt werden. US 5562377 zeigt einen derartigen Montage ablauf.
Bekannt sind lediglich Ankerhülsen für die Durchsteckmontage bei denen zwei Verankerungsbereiche vorgesehen sind. So ist beispielsweise aus der Druckschrift DE 100 38 801 A1 eine Ankerhülse zur Sanierung eines Verblendmauerwerks bekannt. Die bekannte Ankerhülse weist einen ersten Verankerungsbereich mit Austrittsöffnungen für den Mörtel auf. Mit diesem ersten Verankerungsbereich erfolgt die Verankerung der Ankerstange im Tragmauerwerk. An diesen ersten Verankerungsbereich schließt sich entgegen der Einbringrichtung der Ankerhülse ein Rohrstück an. Dieses Rohrstück hat lediglich die Aufgabe, einen Verbindungskanal für den injizierten Mörtel zwischen dem ersten und dem zweiten Verankerungsbereich der Befestigungsanordnung zu schaffen. Der zweite Verankerungsbereich, der sich im Verblendmauerwerk befindet, wird allein durch die Ankerstange und dem Mörtel hergestellt. Das Rohrstück der Ankerhülse ragt lediglich ein kleines Stück in das Verblendmauerwerk, während die Ankerstange aus der Hülse herausragt und von Mörtel umgeben ist. Weder Ankerstange noch Mörtel ragen nach erfolgter Montage jedoch aus dem Verblendmauerwerk heraus, was aus optischen Gründen so gewollt ist. Sofern man beim Verblendmauerwerk überhaupt von einem Befestigungsgegenstand sprechen kann, wird dieser also nicht durch eine mechanisch wirkende Mutter als Gegenlager fixiert, sondern durch einen zweiten chemischen Verbund wie im Tragmauerwerk. Ein solcher zweiter chemischer Verbund setzt jedoch einen entsprechend breiten Befestigungsgegenstand voraus, der eine stabile Anbindung mit Mörtel erlaubt. Dies ist beispielsweise bei einem Befestigungsgegenstand aus Stahl mit einem Flansch in der Regel nicht der Fall.

Der Erfindung liegt daher die Aufgabe zugrunde, eine Vereinfachung für den Montageablauf bei solchen Injektionsbefestigungen zu erreichen, bei denen die Fixierung des zu befestigenden Gegenstandes mit einer Mutter als Gegenlager erfolgt.

Diese Aufgabe wird erfindungsgemäß durch das Verfahren mit den Merkmalen des Anspruchs 1 gelöst. Die Injektionsbefestigungsanordnung weist eine Ankerhülse auf, an deren Verankerungsbereich sich eine Querkrafthülse anschließt. Eine derartige Ankerhülse bietet die Möglichkeit, eine Injektionsbefestigung mit Sicherung des Gegenstands durch eine Mutter auf dem Wege der Durchsteckmontage zu erstellen. Durch die Ausbildung einer Querkrafthülse wird es möglich, dass das Bohrloch im Verankerungsgrund und das Bohrloch im zu befestigenden Gegenstand einen identischen Durchmesser aufweisen. Das Bohrloch im Verankerungsgrund kann durch das Bohrloch des Gegenstands gebohrt werden und anschließend die Ankerhülse direkt ohne Abnehmen des Gegenstandes in das Bohrloch geführt werden. Anschließend wird Mörtel in die Ankerhülse injiziert, der teilweise aus den Sieblöchern der Ankerhülse austritt. Die Ankerstange wird in die Ankerhülse eingebracht und ist hierdurch zumindest im Verankerungsbereich der Ankerhülse nach dem Aushärten des Mörtels verankert. Über die Ankerstange wird der Befestigungsgegenstand aufgeschoben und mittels einer Mutter und gegebenenfalls einer Unterlegscheibe als Gegenlager fixiert. Da die Ankerstange bei dieser Vorgehensweise zwangsläufig einen kleineren Durchmesser als das Bohrloch des Gegenstands aufweist, kann sie im Falle von Querkräften zwischen Gegenstand und Verankerungsgrund diese Verschiebungen alleine nicht aufnehmen. Dies wird jedoch durch die Querkrafthülse erreicht, die im Außendurchmesser vorteilhafterweise dem Durchmesser des Bohrlochs des Gegenstands entspricht.

Um die injektionsbefestigungsanordnung für Gegenstände unterschiedlicher Dicke verwenden zu können, schlägt die Erfindung außerdem vor, dass die Querkrafthülse der Ankerhülse mindestens eine Solltrennstelle aufweist. Dies ermöglicht es dem Bediener, die Ankerhülse im Rahmen der Montage entsprechend der Dicke des Gegenstandes anzupassen, indem die Querkrafthülse gegebenenfalls gekürzt wird. Als Solltrennstelle soll eine Struktur verstanden werden, die ein gezieltes, einfaches Abbrechen oder sonstiges Trennen ermöglicht, also insbesondere eine umlaufende Kerbe. Denkbar sind grundsätzlich aber auch Perforierungen oder lokale Schwächungen durch Veränderung der Materialzusammensetzung. Dabei ist nicht wesentlich, ob das Trennen an der Solltrennstelle mit oder ohne Werkzeugeinsatz erfolgt und ob es sich bei der Trennung um einen Bruch handelt, oder ob eine Kerbe beispielsweise nur zur erleichterten Durchführung eines Schnittes dient. Wesentlich ist vielmehr, dass der Benutzer darin unterstützt wird, eine gezielte Ablängung der Querkrafthülse zu erreichen.

Nach dem Einbringen in das Bohrloch soll die Ankerhülse soweit im Verankerungsgrund bzw. im Gegenstand stecken, dass das dem Bohrloch abgewandte Ende mit der Außenseite des Gegenstands bündig abschließt. Durch Injizieren des Mörtels oder Einbringen der Ankerstange soll diese axiale Position nicht verändert werden. Die Ankerhülse weist daher vorzugsweise an ihrem der Einbringrichtung entgegengesetzten Ende einen Anschlagbund auf. Sofern die Länge der Querkrafthülse nicht an einen dünnen Gegenstand angepasst werden muss, wird die Ankerhülse bis zum Aufsitzen des Anschlagbundes auf dem Gegenstand in das Bohrloch eingeführt und damit gegen ein weiteres Einschieben gesichert. Für den Fall einer Anpassung der Länge der Querkrafthülse - ob mit oder ohne Hilfe einer Solltrennstelle - weist die Ankerhülse vorzugsweise mindestens einen radial nach innen klappbaren Anschlag auf. Es ist vorteilhaft, mehrere über den Umfang verteilte Anschläge jeweils im Bereich einer Solltrennstelle anzuordnen, wobei die Anschläge in einem Zustand vor der Verankerung radial über die Querkrafthülse hinausstehen. Beim Einführen des Ankerhülse in das Bohrloch sitzt die Ankerhülse zunächst an dem axial dem Verankerungsbereich nächsten Anschlag auf. Wurde die Ankerhülse zuvor für diese Verankerungstiefe abgelängt, so verbleibt die Ankerhülse in dieser Position und der Anschlag dient wie zuvor für den Anschlagbund beschrieben zur Sicherung der axialen Position. Sollte die Ankerhülse jedoch gar nicht oder an anderer Stelle abgelängt sein, so kann der Anschlag radial nach innen geklappt werden, wozu eine gewisse Kraft notwendig ist. Damit ist gemeint, dass der Anschlag derart an der Querkrafthülse angebunden ist, dass er zwar die Kräfte, die beim Injizieren des Mörtels oder beim Einbringen der Ankerstange auftreten, aufnehmen kann, ohne geklappt zu werden, dass jedoch aufgrund der Stabilität der Anbindung bei etwas höheren Kräften die Anbindung wie ein Scharnier funktioniert. Radial nach innen bedeutet, dass zumindest kein wesentlicher radialer Überstand von der Querkrafthülse mehr gegeben ist, der Anschlag also beilspielsweise bündig mit der Außenkontur der Querkraffhülse ist. Ohne den Erfindungsgedanken zu verlassen, können die Anschläge statt geklappt zu werden auch abbrechen oder verschoben werden. Wesentlich ist lediglich, dass sie als Anschläge wirken können, diese Wirkung jedoch aufgehoben werden kann. Beim weiteren Einführen der Ankerhülse in das Bohrloch können auf diese Weise mehrere Anschläge überwunden werden, bis das dem Bohrloch abgewandte Ende mit einem Anschlag oder einem Anschlagbund anliegt.

Alternativ zu nach innen klappbaren Anschlägen kann die Ankerhülse einen axial verstellbaren Anschlagbund aufweisen. Die axiale Verstellbarkeit kann durch ein zusätzliches Teil hergestellt werden, welches beispielsweise durch ein Gewinde oder Rasteinrichtungen in unterschiedliche axiale Positionen verbringbar und in diesen zumindest leicht fixierbar ist. Daneben wäre es auch möglich, der Ankerhülse selbst eine axiale Flexibilität, beispielsweise durch Ausbildung eines faltenbalgartigen Abschnittes, zu verleihen. Auch dies würde eine Verstellbarkeit in axialer Richtung des Anschlagbunds bewirken.

Die Übertragung von Querkräften zwischen dem zu befestigenden Gegenstand und dem Untergrund kann allein aufgrund der Querkrafthülse erfolgen. Um besonders hohe Kräfte übertragen zu können, wird soviel Mörtel in die Ankerhülse injiziert, dass sich auch der ringförmige Spalt zwischen Ankerstange und Innenseite der Querkrafthülse füllt. Nach dem Aushärten des Mörtels können hierdurch die Querkräfte auch über diese Mörtelschale und die Ankerstange übertragen werden. Gerade bei kleineren Ankerstangendurchmessern sind hierzu jedoch teilweise erhebliche Mörtelmengen erforderlich. Die Erfindung schlägt daher weiterhin vor, dass eine Ausgleichshülse in den Bereich zwischen die Ankerstange und die Querkrafthülse eingebracht wird. Diese Ausgleichshülse kann aus Kunststoff, aber auch aus Zinkdruckguss oder dergleichen hergestellt sein. Sie ersetzt den Mörtel in diesem Bereich, und macht die injektionsbefestigungsanordnung hierdurch günstiger und verkürzt den Injektionsvorgang. Die Ausgleichshülse kann kreisrohrförmig sein, also beispielsweise mit einer über den Umfang konstanten Wanddicke, vorzugsweise ist sie jedoch nicht kreisrund und weist axial verlaufende Knickstellen auf. Sie ist hierdurch auf unterschiedliche Ankerstangendurchmesser anpassbar. Während sie bei Ankerstangen bei kleinem Durchmesser beispielsweise einen in etwa quadratischen Querschnitt einnimmt und hierdurch die Ankerstange innerhalb der Querkrafthülse zentriert, kann sie bei Ankerstangen mit größerem Durchmesser zu einem nahezu kreisrunden Querschnitt angepasst werden.

Die Erfindung wird nachfolgend anhand eines in der Zeichnung dargestellten Ausführungsbeispiels näher erläutert. Es zeigen:
- Figur 1: die Injektionsbefestigungsanordnung im fertig montierten Zustand mit abgelängter Ankerhülse in einer Schnittdarstellung;
- Figur 2: die Ankerhülse derselben injektionsbefestigungsanordnung im Zustand vor einer Montage in einer perspektivischen Darstellung;
- Figur 3: eine alternative Ankerhülse mit Ankerstange im Zustand vor einer Montage in einer perspektivischen Darstellung; und
- Figur 4: eine Ausgleichshülse.

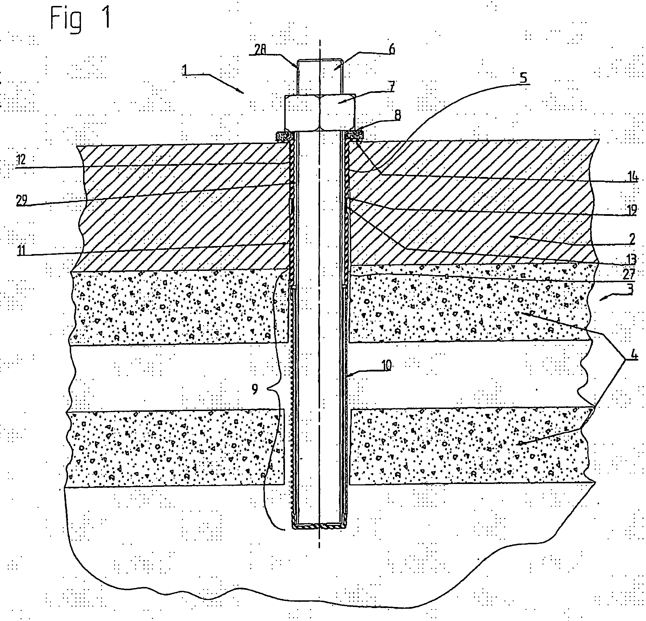

Die in Figur 1 dargestellte Injektionsbefestigungsanordnung 1 dient der Befestigung des Gegenstandes 2 an einem Verankerungsgrund 3 aus Lochbaustoff mit Stegen 4. Der Übersicht halber ist der fertig montierte Zustand ohne Mörtel dargestellt. Die injektionsbefestigungsanordnung 1 besteht aus einer Ankerhülse 5, einer Ankerstange 6, einer Mutter 7 als Gegenlager für den Gegenstand 2 sowie einer Unterlagscheibe 8. Die Ankerhülse 5 weist einen Verankerungsbereich 9 mit Austrittsöffnungen 10 für den injizierten Mörtel auf. An den Verankerungsbereich 9 schließt sich eine im Wesentlichen geschlossene Querkrafthülse 11 an. Der Außendurchmesser der Querkrafthülse 11 entspricht weitgehend dem Durchmesser der Bohrung 12 im Gegenstand 2. Im Bereich der Querkrafthülse 11 sind an zwei Stellen jeweils kranzförmig entlang des Umfangs der Querkrafthülse 11 angeordnete zungenförmige Anschläge 13, 14 angeordnet, die radial nach innen klappbar sind. Die Klappbarkeit ergibt sich lediglich aus der kleinen Querschnittsfläche, mit der die Anschläge 13, 14 an die Querkrafthülse 11 angebunden sind. Dieser Effekt könnte durch Einkerbungen oder dgl. verstärkt werden. Die in der Bohrung 12 angeordneten Anschläge 13 sind nach innen in Aussparungen 19 geklappt, während die Anschläge 14 tatsächlich als Anschläge dienen.

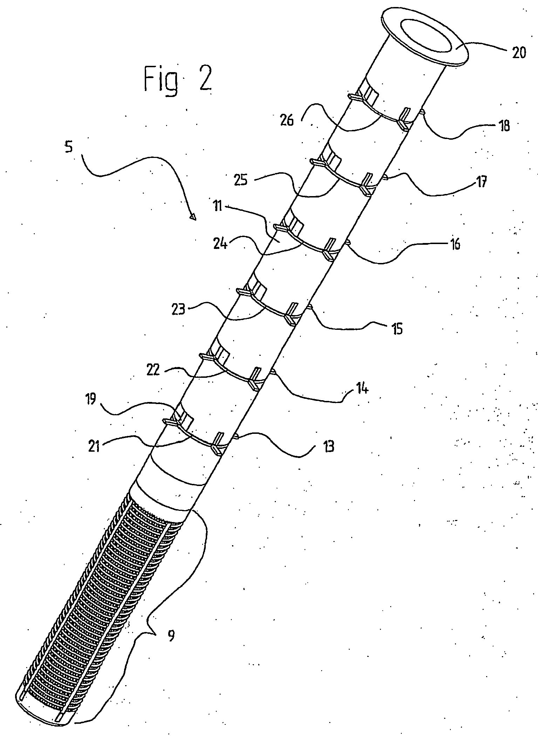

Figur 2 zeigt die Ankerhülse 5 vor der Montage in ungekürzter Länge. An den Verankerungsbereich 9 schließt sich die Querkrafthülse 11 mit sechs Kränzen Anschläge 13 bis 18 sowie einem Anschlagbund 20 an. Die Anschläge 13 bis 18 sind jeweils in Aussparungen 19 klappbar. Die Aussparungen 19 durchbrechen in dem vorliegenden Ausführungsbeispiel vollständig die Querkrafthülse 11, sie könnte jedoch auch mit einer sehr dünnen Spritzhaut auf der Innenseite verschlossen sein eventuelles Austreten von Mörtel zu verhindern. Jedem Kranz Anschläge 13 bis 18 ist eine umlaufende Solltrennstelle 21 bis 26 in Form einer umlaufenden Kerbe zugeordnet.

Im Folgenden wird der Montageablauf anhand beider Figuren 1 und 2 dargestellt. Zunächst wird sowohl im Gegenstand 2 (sofern nicht schon vorhanden) und in den Verankerungsgrund 3 jeweils ein Bohrloch 12 bzw. 27 erstellt. Dies kann derart erfolgen, dass der Gegenstand 2 an der gewünschten Position auf den Verankerungsgrund 3 aufgesetzt wird und durch den Gegenstand 2 hindurch das Bohrloch 12 bzw. 27 erstellt wird. Zuvor oder auch danach wird die Ankerhülse 5 in ihrer Länge an die Dicke des Gegenstandes 2 angepasst, im vorliegenden Fall also an der Solltrennstelle 22 abgebrochen. Anschließend wird die Ankerhülse 5 durch das Bohrloch 12 im Gegenstand 2 bis in das Bohrloch 27 im Verankerungsgrund 3 gesteckt. Beim Einführen kommen zunächst die Anschläge 13 auf dem Gegenstand 2 zur Anlage. Durch etwas festeres Drücken auf die Ankerhülse 5 klappen die Anschläge 13 radial nach innen und die Ankerhülse 5 kann bis zur Anlage der Anschläge 14 in das Bohrloch 12 bzw. 27 geschoben werden, Im Weiteren wird Mörtel in den Verankerungsbereich 9 der Ankerhülse 5 injiziert. Durch das Einführen der Ankerstange 6 in die Ankerhülse 5 wird der Mörtel verdrängt und fließt hierdurch sowohl aus den Austrittsöffnungen 10 als auch teilweise in die Querkrafthülse 5. Dabei verhindern die Anschläge 14 ein weiteres Eindringen der Ankerhülse 5 in den Verankerungsgrund 3. Durch den Austritt aus den Austrittsöffnungen 10 bildet der Mörtel im ausgehärteten Zustand sowohl durch seine Klebewirkung als auch durch Hintergreifung der Stege 4 bzw. des Gewindes 28 der Ankerstange 6 einen sehr guten Verbund mit dem Verankerungsgrund 3 bzw. mit der Ankerstange 6. Um den Gegenstand 2 abschließend zu fixieren wird die Unterlagscheibe 8 auf die Ankerstange 6 aufgeschoben und die Mutter 7 auf das Gewinde 28 aufgeschraubt und angezogen. Sollte es zu einer Querkraftbeanspruchung zwischen Gegenstand 2 und Verankerungsgrund 3 kommen, so kann diese durch die Querkrafthülse 5 aufgenommen werden. Verbessert wird diese Möglichkeit, wenn der Zwischenraum 29 zwischen Querkrafthülse 5 und Ankerstange 6 zumindest teilweise mit Mörtel ausgefüllt ist, da dann die Ankerstange 6 ebenfalls einen Teil der Querkräfte übertragen kann.

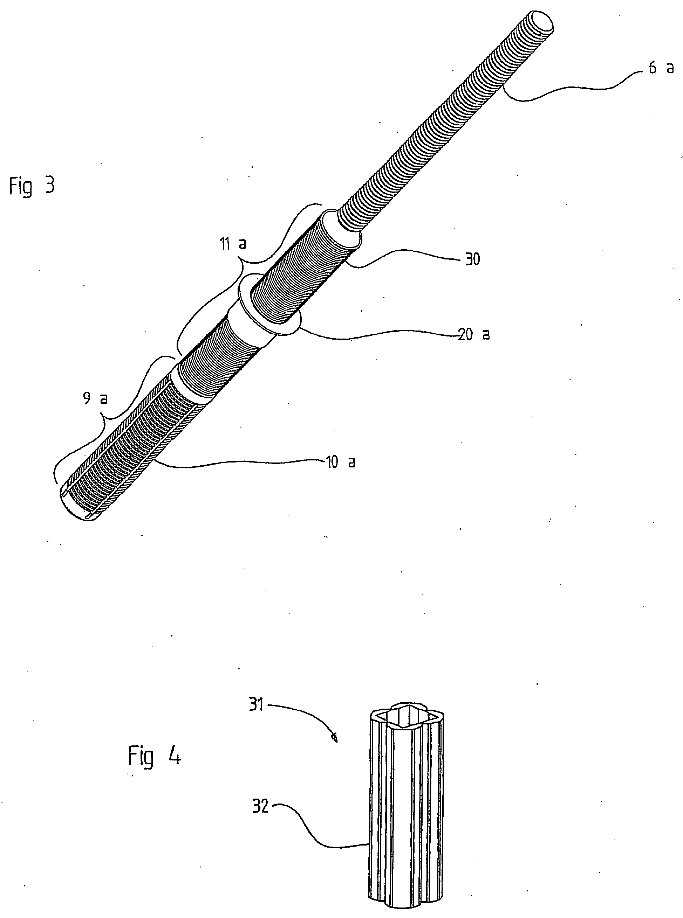

Figur 3 zeigt eine Variante der Ankerhülse 5a. Sie weist ebenfalls einen Verankerungsbereich 9a mit Austrittsöffnungen 10a sowie eine Querkrafthülse 11a auf. Im Gegensatz zu der in Figur 1 und 2 dargestellten Ankerhülse 5, ist der Anschlagbund 20a axial verstellbar. Er ist als separates Teil mit einem Innengewinde ausgebildet, welches einem Außengewinde 30 auf der Querkrafthülse 11 a entspricht. Zur Montage der Injektionsbefestigungsanordnung wird der Anschlagbund 20a durch Drehen an die Dicke des Gegenstandes angepasst, und dann der über den Anschlagbund 20a hinausstehende Teil der Querkrafthülse 11 a abgeschnitten. Anschließend wird die Ankerhülse 5a wiederum durch das Bohrloch im Gegenstand bis in das Bohrloch im Verankerungsgrund gesteckt.

Wie beispielhaft aus Figur 3 deutlich wird, kann die Ankerstange 6a einen gegenüber dem Durchmesser der Querkrafthülse 11a deutlich reduzierten Außendurchmesser aufweisen. Um den Bereich zwischen der Ankerstange 6a und der Innenseite der Querkrafthülse 11a zur Übertragung von Querkräfte zu füllen, kann dieser entweder ebenfalls mit Mörtel ausgefüllt oder eine Ausgleichshülse 31 entsprechend Figur 4 eingebracht werden. Die Ausgleichshülse 31 hat einen über ihre Länge im Wesentlichen konstanten Querschnitt, wobei dies nicht zwingend erforderlich ist. Sie ist also rohrförmig, allerdings nicht kreisrund mit über den Umfang konstanter Wanddicke, sondern annähernd quadratisch, mit Knickstellen 32 in Form von axial verlaufenden Ausnehmungen.

Bei kleinen Ankerstangendurchmessem kann die Ausgleichshülse 31 in dieser Form in die Querkrafthülse 11a eingebracht werden, um anschließend den Mörtel zu injizieren und die Ankerstange 6a einzubringen. Dabei können diese Schritte auch in anderer Reihenfolge erfolgen. Das durch Mörtel zu füllende Volumen zwischen Ankerstange 6a und Innenseite der Querkrafthülse 11a wird durch das Volumen der Ausgleichshülse 31 reduziert. Dies erspart Mörtel und die Zeit zum Injizieren dieses Mörtels. Weiterhin hat die Ausgleichshülse 31 die Funktion einer Zentrierung der Ankerstange 6a innerhalb der Querkrafthülse 11a, wodurch eine gleichmäßige Krafteinleitung in den Untergrund und damit hohe Haltewerte bewirkt werden. Bei größeren Ankerstangendurchmessern kann der Querschnitt der Ausgleichshülse 31 aufgrund einer Verformung an den Knickstellen 32 mehr einer Kreisform angenähert werden. Die Querkrafthülse 31 ist damit auch für größere Ankerstangendurchmesser geeignet und erfüllt weiterhin die Funktion der Ausfüllung des Ringspaltvolumens sowie der Zentrierun der Ankerstange 6a innerhalb der Querkrafthülse 11a.

## Patentansprüche

1. Verfahren zur Injektionsbefestigung eines zu befestigenden Gegenstands (2) mit einer Ankerhülse (5, 5a), die einen Verankerungsbereich (9, 9a) und eine Querkrafthülse (11, 11a) aufweist, einer Ankerstange (6, 6a) mit Gewinde (28) und einer Mutter (7) als Gegenlager für den zu befestigenden Gegenstand (2), wobei die Montage als Durchsteckmontage erfolgt und mindestens folgende Schritte umfasst:
- Erstellen eines Bohrlochs (12, 27) im zu befestigenden Gegenstand (2) und im Verankerungsgrund (3);
- Anpassen der Ankerhülse (5, 5a) in ihrer Länge an die Dicke des zu befestigenden Gegenstandes (2) durch Abbrechen oder Abtrennen eines Teils der Querkrafthülse (11, 11a);
- Einführen der Ankerhülse (5, 5a) in das Bohrloch (27) im Verankerungsgrund (3) durch das Bohrloch (12) im zu befestigenden Gegenstand (2);
- Injizieren von Mörtel in den Verankerungsbereich (9, 9a) der Ankerhülse (5, 5a);
- Einführen der Ankerstange (6, 6a) in die Ankerhülse (5, 5a); und
- Aufschrauben der Mutter (7) auf ein Gewinde (28) der Ankerstange (6, 6a).

2. Verfahren nach Anspruch 1, das folgenden Schritt umfasst:
- Ausfüllen des Bereichs zwischen der Ankerstange (6, 6a) und der Innenseite der Querkrafthülse (11, 11 a) mit Mörtel.

3. Verfahren nach Anspruch 1, das folgenden Schritt umfasst:
- Einbringen einer Ausgleichshülse (31) in den Bereich zwischen der Ankerstange (6, 6a) und der Innenseite der Querkrafthülse (11, 11a).

4. Verfahren nach Anspruch 3, **dadurch gekennzeichnet, dass** die Ausgleichshülse (31) axial verlaufende Knickstellen (32) aufweist.

5. Verfahren nach Anspruch 1, bis **dadurch gekennzeichnet, dass** sich an den Verankerungsbereich (9a) der Ankerhülse (5a) die Querkrafthülse (11 a) anschließt, die einen axial verstellbaren Anschlagbund (20a) aufweist.

6. Verfahren nach Anspruch 1, **dadurch gekennzeichnet, dass** sich an den Verankerungsbereich (9) der Ankerhülse (5) die Querkrafthülse (11) anschließt, die mindestens einen radial nach innen klappbaren Anschlag (13 bis 18) aufweist, und dass der Anschlag (13 bis 18) in einem Zustand vor der Verankerung radial über die Querkrafthülse (11) hinaussteht.

7. Verfahren nach Anspruch 1, **dadurch gekennzeichnet, dass** die Querkrafthülse (11) der Ankerhülse (5) mindestens eine Solltrennstelle (21 bis 26) aufweist.

8. Verfahren nach Anspruch 1, **dadurch gekennzeichnet, dass** die Querkrafthülse (11) an seinem dem Verankerungsbereich (9) abgewandten Ende einen Anschlagbund (20) aufweist.

## Claims

1. Method of injection fixing an article (2) to be fixed, using an anchor sleeve (5, 5a), which has an anchoring region (9, 9a) and a transverse-force sleeve (11, 11a), using an anchor rod (6, 6a) having a thread (28), and using a nut (7) as abutment for the article (2) to be fixed, mounting being carried out as push-through mounting and comprising at least the following steps:
- drilling a hole (12, 27) in the article (2) to be fixed and in the anchoring substrate (3);
- matching the length of the anchor sleeve (5, 5a) to the thickness of the article (2) to be fixed by breaking off or separating off part of the transverse-force sleeve (11, 11 a);
- introducing the anchor sleeve (5, 5a) into the hole (27) drilled in the anchoring substrate (3) through the hole (12) drilled in the article (2) to be fixed;
- injecting mortar into the anchoring region (9, 9a) of the anchor sleeve (5, 5a);
- introducing the anchor rod (6, 6a) into the anchor sleeve (5, 5a); and
- screwing the nut (7) up on a thread (28) of the anchor rod (6, 6a).

2. Method according to claim 1, comprising the following step:
- filling the region between the anchor rod (6, 6a) and the inside of the transverse-force sleeve (11, 11 a) with mortar.

3. Method according to claim 1, comprising the following step:
- introducing a compensating sleeve (31) into the region between the anchor rod (6, 6a) and the inside of the transverse-force sleeve (11, 11a).

4. Method according to claim 3, **characterised in that** the compensating sleeve (31) has axially extending flutes (32).

5. Method according to claim 1, **characterised in that** the transverse-force sleeve (11a) which has an axially adjustable stop collar (20a) follows the anchoring region (9a) of the anchor sleeve (5a).

6. Method according to claim 1, **characterised in that** the transverse-force sleeve (11) which has at least one stop (13 to 18) which is foldable radially inwards follows the anchoring region (9) of the anchor sleeve (5); and **in that** the stop (13 to 18) projects radially out beyond the transverse-force sleeve (11) in the state prior to anchoring.

7. Method according to claim 1, **characterised in that** the transverse-force sleeve (11) of the anchor sleeve (5) has at least one intended separation location (21 to 26).

8. Method according to claim 1, **characterised in that in that** the transverse-force sleeve (11) has a stop collar (20) at its end which is remote from the anchoring region (9).

## Revendications

1. Procédé de fixation, par injection, d'un objet (2) devant être fixé, impliquant un fourreau d'ancrage (5, 5a) muni d'une zone d'ancrage (9, 9a) et d'une douille (11, 11a) à forces transversales, une tige d'ancrage (6, 6a) pourvue d'un filetage (28), et un écrou (7) remplissant la fonction d'une contre-butée affectée audit objet (2) à fixer, sachant que le montage s'opère en tant que montage par emboîtement et inclut au moins les étapes suivantes :
- façonnage d'un trou foré (12, 27) dans l'objet (2) à fixer et dans le support d'ancrage (3) ;
- adaptation de la longueur du fourreau d'ancrage (5, 5a) à l'épaisseur dudit objet (2) à fixer, par rupture ou dissociation d'une partie de la douille (11, 11a) à forces transversales ;
- insertion dudit fourreau d'ancrage (5, 5a) dans le trou foré (27) pratiqué dans ledit support d'ancrage (3), à travers le trou foré (12) pratiqué dans ledit objet (2) à fixer ;
- injection de mortier dans la zone d'ancrage (9, 9a) dudit fourreau d'ancrage (5, 5a);
- insertion de la tige d'ancrage (6, 6a) dans ledit fourreau d'ancrage (5, 5a) ; et
- vissage de l'écrou (7) sur un filetage (28) de ladite tige d'ancrage (6, 6a).

2. Procédé selon la revendication 1, incluant l'étape suivante :
- comblement, par du mortier, de la région située entre la tige d'ancrage (6, 6a) et la face intérieure de la douille (11, 11a) à forces transversales.

3. Procédé selon la revendication 1, incluant l'étape suivante :
- insertion d'un manchon de compensation (31) dans la région située entre la tige d'ancrage (6, 6a) et la face intérieure de la douille (11, 11a) à forces transversales.

4. Procédé selon la revendication 3, **caractérisé par le fait que** le manchon de compensation (31) présente des zones de fléchissement (32) s'étendant dans le sens axial.

5. Procédé selon la revendication 1, **caractérisé par le fait que** la douille (11a) à forces transversales, dotée d'une collerette de butée (20a) réglable dans le sens axial, se rattache à la zone d'ancrage (9a) du fourreau d'ancrage (5a).

6. Procédé selon la revendication 1, **caractérisé par le fait que** la douille (11) à forces transversales, pourvue d'au moins une butée (13 à 18) rabattablc vers l'intérieur dans le sens radial, se rattache à la zone d'ancrage (9) du fourreau d'ancrage (5) ; et **par le fait que** ladite butée (13 à 18) fait saillie radialement au-delà de ladite la douille (11) à forces transversales à l'état précédant l'ancrage.

7. Procédé selon la revendication 1, **caractérisé par le fait que** la douille (11) à forces transversales du fourreau d'ancrage (5) est munie d'au moins une zone (21 à 26) de rupture par destination.

8. Procédé selon la revendication 1, **caractérisé par le fait que** douille (11) à forces transversales présente une collerette de butée (20) à son extrémité tournée à l'opposé de la zone d'ancrage (9).
